# EUROPÄISCHE PATENTSCHRIFT

(11) **EP 1 401 693 B1**
(45) Veröffentlichungstag und Bekanntmachung des Hinweises auf die Patenterteilung: **09.03.2005**
(21) Anmeldenummer: 01967574.3
(22) Anmeldetag: 24.09.2001
(51) Int. Cl.: B61D 47/00, B65G 63/02, B66C 23/50

(54) **EISENBAHN-CONTAINERUMLADEVORRICHTUNG**
RAILWAY CONTAINER TRANSHIPMENT DEVICE
DISPOSITIF DE TRANSBORDEMENT DE CONTENEURS DE CHEMINS DE FER

(30) Priorität: 28.12.2000 HU 0005012 P
(43) Veröffentlichungstag der Anmeldung: 31.03.2004
(73) Patentinhaber: Vida, Laszlo, 1188 Budapest (HU)
(72) Erfinder: Vida, Laszlo, 1188 Budapest (HU)
(74) Vertreter: Pintz, György
(86) Internationale Anmeldenummer: PCT/HU2001/000094
(87) Internationale Veröffentlichungsnummer: WO 2002/053441

(56) Entgegenhaltungen:
- EP-A- 0 438 998
- WO-A-96/17797
- GB-A- 2 015 970

## Beschreibung

Gegenstand der Erfindung ist eine Eisenbahn-Containerumladevorrichtung, welche - zweckmäßig zwei - Rahmeneinheiten, eine auf die Rahmeneinheit gesetzte Hebevorrichtung und Container Befestigungselemente enthält, und wie sie z.B durch die GB-A-2015970 bekannt ist.

Die Umleitung eines Teils des Straßengütertransports auf die Eisenbahn ist ein vorrangiges Ziel der europäischen Länder. Ein Hindernis in diesem Bestreben ist, dass die Umladung von Containern von Lastkraftwagen auf Eisenbahngüterwagen und umgekehrt ziemlich schwerfällig ist. Die Hebekrane heben die Container meistens von oben an, was - besonders auf elektrifizierten Strecken - bedeutende Schwierigkeiten macht. Nämlich, Krane können auf elektrifizierten Strecken nicht eingesetzt werden. In solchen Fällen werden die Güterwagen zum Abladen erst mit einer Diesellokomotive auf einen Streckenabschnitt ohne Fahrleitung gezogen, was viel Zeit und Energie kostet. Es sind auch verschiedene Karren und Seitenhebezeugen bekannt. Diese werden dort gebraucht, wo kein Kran zur Verfügung steht. Ihr Nachteil besteht darin, dass sie den Container auch hoch heben, und so auf elektrifizierten Strecken nicht eingesetzt werden können. Ein weiterer Nachteil der Karren und Seitenhebezeuge ist, dass sie schwer beweglich sind und nur auf einer Seite arbeiten können.

Die Patentschrift US 3.637.100 beschreibt einen Gabelkarren, dessen Gabeleinheit schwenkbar ist und in allen drei Richtungen bewegt werden kann. Jedoch ist dieser bewegliche Karren für Eisenbahnstrecken nicht geeignet, er wird vor allem in kleineren Lagern benutzt.

Die Offenlegungsschrift DE 2.521.087 gibt eine selbständige Ladevorrichtung bekannt, welche auf dem Plato eines Transportfahrzeuges gestellt werden kann. Die Ladevorrichtung befindet sich auf den auf dem Fahrzeug angeordneten Schienen. Ihr Nachteil ist, dass alle Transportfahrzeuge mit dieser Ladevorrichtung versehen werden müssten, was nicht vertretbare Kosten bedeuten würde. Die Lösung laut Offenlegungsschrift DE 2,885.665 verschiebt die Container mit Rollen auf einem Band. Der Lastkraftwagen muss dicht an den Eisenbahnwagen heranfahren und der Container wird auf gleich hohen Rollen verschoben. Der Nachteil dieser Lösung ist, dass sie schwerfällig ist und dass man auch hier die Fahrzeuge mit einer Rollenvorrichtung versehen muss, was sehr kostspielig ist.

Die Offenlegungsschrift DE 1.531.990 macht eine Containerumladevorrichtung bekannt, welche auf einem mit Rädern versehenem Fahrzeug befestigt ist und eine Hebevorrichtung besitzt, welche sich auf Schienen bewegt. Die Schienen ragen auf beiden Seiten vom Fahrzeug heraus. Die Hebevorrichtung arbeitet zwischen den Tragschienen. Ihr Nachteil ist, dass das Umladen der Container nur unter beschränkten Bedingungen möglich ist. Das die Hebevorrichtung tragende Schienenpaar ist nämlich an beiden Seiten des Containers angeordnet, so dass man mit dieser Vorrichtung nur einzeln abgestellte Container umladen kann. Die Container sind aber meistens dicht nebeneinander auf das Fahrzeug gestellt so, dass diese Vorrichtung nicht benutzt werden kann.

Die Patentschrift HU 214.170 und die Offenlegungsschrift WO 97/03.014 geben ein Fahrzeug zum Heben und Bewegen von Containern bekannt, welches auch auf elektrifizierten Strecken einsatzfähig ist. Das Fahrzeug stellt so eine zweiseitige seitliche Umladevorrichtung dar, welche sich parallel bewegende Rahmen zum Anfassen des Containers besitzt. Zum Umladen auf die entgegengesetzte Seite muss der Container abgestellt werden, dann muss die Hebevorrichtung unter dem Container durchgeführt werden um den Container wiederholt anzufassen. Dann kann der Container auf das andere Transportfahrzeug gehoben werden. Der Nachteil dieser Lösung besteht darin, dass die Container nur an den Seiten angefasst werden können, und daher ist sie nur für Container geeignet, an deren Seiten Anfassöffnungen vorgesehen sind.Nachteilig ist auch der Umstand, dass die Lösung mehrere, sich neben einander bewegende Teleskope, bzw. Oberflächen besitzt, wobei der Schutz dieser Teile gegen Verschmutzung und die Sicherung genauer Parallelität eine schwere und kostspielige Aufgabe ist. Die Lösung hat sich in der Praxis nicht bewährt.

Nach unserem Prioritätstag wurde in der Offenlegungsschrift WO 01/28.836 eine Weiterentwicklung der vorhergehenden Lösung bekannt gegeben. Danach kann der Container auch schon von oben mittels eines herausragenden Balkens angefasst werden. Diese Lösung kann sich auch nur parallel zu den Koordinatenachsen bewegen, was gewisse Nachteile hat. Die Vorrichtung kann den Container nur auf einen Lastkraftwagen verladen, der streng parallel zur Strecke steht. Sie enthält gleitende Planflächen, bei welchen Reibung und Verschleiß entsteht, die Konstruktion kann sich festklemmen. Um das Festklemmen zu vermeiden muss das Gerät mechanisch sehr massiv sein, weil eine elastische Deformation nicht zugelassen werden kann. Die massive Konstruktion erhöht die Kosten und das Gewicht. Ungünstig ist auch, dass die Vorrichtung beim Abstellen des Containers zwischen andere, dieser nicht an den Eckelementen abgestützt wird und dadurch leichter beschädigt werden kann. Um den Container auf die entgegengesetzte Seite abzuladen, muss man ihn noch einmal anfassen, was die Zyklusdauer verlängert. Bein Heben eines Containers von 8,5 Tonnen entsteht am Ende des oberen Balkens ein Moment von 22 mt, wodurch der Balken ein wenig verbogen wird, woraus sich eine schiefe Lage des Containers ergibt, was das genau Abstellen erschwert. Das genaue Abstellen wird auch dadurch erschwert, dass das Verspreizgerät keine Rollen hat, so dass eine Korrektion in Längsrichtung nach dem Anfassen nicht möglich ist. Zum Einsatz dieser Umladevorrichtung wird ein Abstand der Schienenmitten von 5 m benötigt.

Ziel der Erfindung ist die Behebung der Mängel der bisherigen Lösungen und die Entwicklung so einer Eisenbahn-Containerumladevorrichtung, welche auch auf elektrifizierten Strecken eingesetzt werden kann, den Container auch von oben anfassen kann, betriebsicher ist, auch in zwei Richtungen schnell umladen kann, bei welcher die Lage des Containers leicht korrigiert werden und dadurch dieser sehr genau abgestellt werden kann und für das Umladen verschiedener Typen von Containern geeignet is.

Die Grundidee der Erfindung ist die Erkenntnis, dass wenn man raumsparende und mit einander zusammenarbeitende Kraneinheiten und Rahmeneinheiten mit einander so verbindet, dass sie zueinander verrückbar sind, so erreichen wir eine günstigere Lösung als die vorherigen.

Entsprechend dem gesetzten Ziel ist die Erfindung eine Eisenbahn-Containerumladevorrichtung, welche - zweckmäßig zwei - Rahmeneinheiten, eine auf jeden Rahmen gesetzte Hebevorrichtung und Container Befestigungsteile enthält, derart ausgebildet, dass die Hebevorrichtung zwei - zweckmäßig spiegelsymmetrisch angeordnete - für Zusammenarbeit geeignete Kraneinheiten bilden, die Kraneinheiten je ein Drehgestell, einen unteren Auslegerarm, einen oberen Auslegerarm, ein unteres Betätigungsorgan, ein oberes Betätigungsorgan und ein Hebeorgan enthält, die Rahmeneinheiten durch eine axiale bewegliche Einheit miteinander verbunden sind, der Winkel, den die Aufsichtlängsachse der den Container hebenden Kraneinheiten und die Längsachse der Umladevorrichtung bilden mit der Entfernung zwischen den Rahmeneinheiten proportional ist.

Ein weiteres Kennzeichen der Erfindung ist, dass zwischen den Rahmeneinheiten eine zur provisorischen Abstützung des Containers geeignete Trageinheit vorgesehen ist. Die Trageinheit ist mit Tragrädern versehen, die Tragräder stützen sich auf dieselbe Strecke, wie Räder der Rahmeneinheiten.

Bei einem Ausführungsmuster sind zwischen den Rahmeneinheiten parallele Verbindungselemente eingelegt, die Verbindungselemente gehen durch die eine Rahmeneinheit hindurch und sind an der anderen Rahmeneinheit befestigt. Das Verbindungselement mündet in die auf der Strecke befindliche Längsstütze.

Bei einem weiteren Ausführungsmuster schließt sich das Hebeorgan durch eine Gelenkeinheit an den oberen Auslegerarm an und ist mit dem Befestigungsteil und gegebenen Falls mit der Hängeeinheit verbunden. Die Hängeeinheit besitzt einen Gelenk- oder Teleskoparm, ferner ein Anfasselement, welches zur Befestigung des Unterteils des austauschbaren Oberbaus geeignet ist.

Kennzeichnen kann auch sein, dass die Länge des unteren Auslegerarm teleskopartig verändert werden kann. Das untere Betätigungsorgan und das obere Betätigungsorgan enthalten einen hydraulischen Arbeitszylinder und eine Schraubenspindel. An die Rahmeneinheit schließt sich die Querstützeinheit an, welche für das Auflegen auf die mit der Strecke parallel laufenden Stützschiene geeignet ist.

Die erfindungsmäßige Einsenbahn-Containerumladevorrichtung hat zahlreiche Vorteile. Sie ermöglicht eine schnellere Verbreitung des Gütertransports auf der Eisenbahn. Sie kann auch auf Strecken mit einer oberen Fahrleitung eingesetzt werden. Die geringe Hubhöhe der Container mäßigt auch die allgemeine Unfallgefahr bei Hebearbeiten. Ihre Herstellung ist billiger, als die der bisherigen Containerumladevorrichtungen. Der Betrieb ist günstiger, weil das Umladen in großem Maße automatisiert werden kann. Besonders vorteilig ist, dass keine spezielle Umladefläche, Container Terminale gebaut werden müssen, die Benutzung einer Diesellokomotive kann vermieden werden.

Günstig ist auch, dass die Vorrichtung den Container auch auf die entgegengesetzte Seite in einem Zug abladen kann, die Lage des Containers leicht korrigiert werden kann, wodurch eine genaue Abstellung ermöglicht wird, auf elastische Deformation ist sie nicht empfindlich, sie kann auch bei einem Abstand der Schienenmitten von 4 m eingesetzt werden. Die Konstruktion ermöglicht auch die Anwendung von Rollenverspreizungen.

Im folgenden wird die Erfindung anhand von Zeichnungen näher beschreiben. Auf den Zeichnungen sind dargestellt:
Abb. 1: Seitenansicht der Vorrichtung,
Abb. 2: Aufsicht der Vorrichtung,
Abb. 3: Aufsicht der Containeranfassvorrichtung,
Abb. 4: Aufsicht des angehobenen Containers, über der Vorrichtung eingedreht
Abb. 5-9: Einzelne Schritte des Containerumladevorgangs in der Vorderansicht,
Abb. 10: Skizze des Anfassens des austauschbaren Oberbaus mit der Hängeeinheit.

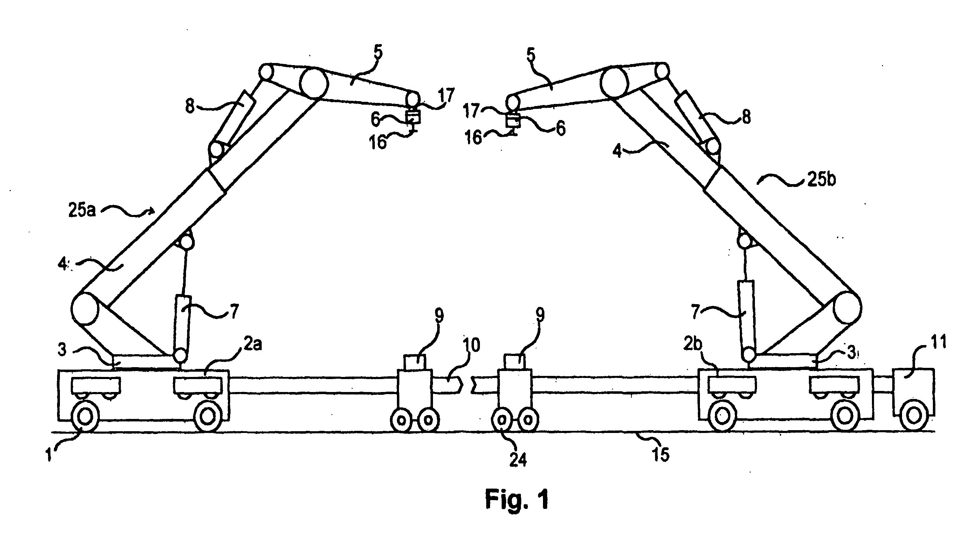

Laut Abbildung 1 befinden sich die Rahmeneinheiten 2a, 2b der erfindungsmäßigen Eisenbahn-Containerumladeeinrichtung, dessen raumsparende Hebevorrichtung die Kraneinheiten 25a, 25b bilden, auf der Strecke 15. Die Kraneinheiten 25a, 25b sind mit je einem Drehgestell 3, dem teleskopartig herausziehbaren unteren Auslegerarm 4, dem oberen Auslegerarm 5 und dem Hebeorgan 6 versehen. Den unteren Auslegerarm 4 betätigt das untere Betätigungsorgan 7, den oberen Auslegerarm 5 betätigt das obere Betätigungsorgan 8. Am oberen Auslegerarm 5 befindet sich - mit dem zwischengelegten, das Bewegen in zwei Richtungen ermöglichenden Gelenkteil 17 - das balkenartige Hebeorgan 6. An das Hebeorgan 6 schließt sich an das Befestigungselement 16 an.

Zwischen die Rahmeneinheiten 2a, 2b sind die mit der Strecke 15 parallelen Verbindungselemente 10 eingesetzt. Die Verbindungselemente 10 sind an der Rahmeneinheit 2a befestigt, laufen durch die Rahmeneinheit 2b und münden in die Längsstütze 11. Zwischen die Rahmeneinheiten 2a, 2b ist die den Container provisorisch abstützende Trageinheit 9 eingelegt. Die Trageinheit 9 mit den Tragrädern 24 stützt sich auf die Strecke 15. Das untere Betätigungsorgan 7 und das obere Betätigungsorgan 8 enthalten einen hydraulischen Arbeitszylinder.

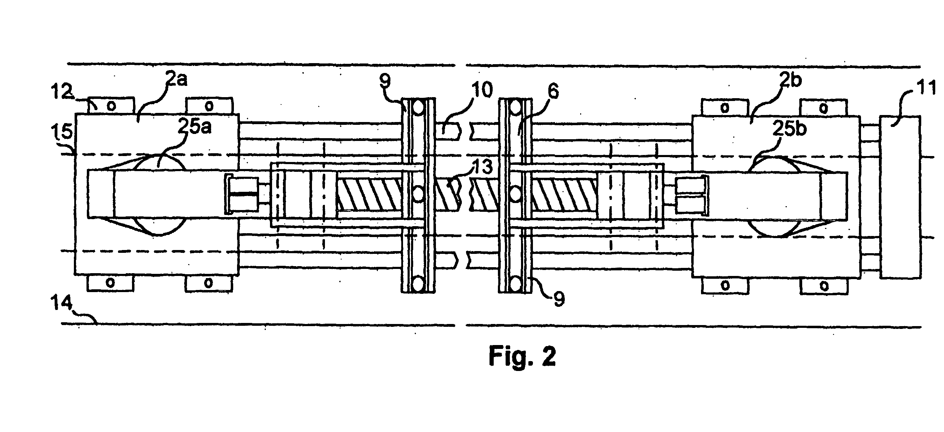

Auf Abb. 2 kann man das Ausführungsmuster gemäß Abb. 1 in der Aufsicht sehen. Die Vorrichtung befindet sich auf der Strecke 15. Auf der Rahmeneinheit 2a befindet sich die Kraneinheit 25a, während die Kraneinheit 25b auf der Rahmeneinheit 2b angeordnet ist. Die Rahmeneinheiten 2a, 2b sind mittels der sich teleskopartig bewegenden Betätigungseinheit 13 verbunden. Sichtbar sind das Verbindungselement 10, die Trageinheit 9, sowie das über ihnen hängende Hebeorgan 6. Die Stabilität der Vorrichtung wird durch die Längsstütze 11 und die Querstütze 12 gesichert Die aus den Rahmeneinheiten 2a, 2b herausschiebbare Querstützen 12 stützen sich auf die Abstützschiene 14, die neben der Strecke 15 angeordnet ist. Wenn sich die Kraneinheiten 25a, 25b spiegelsymmetrisch nach innen, bzw. nach außen drehen, so wird der Abstand zwischen den Rahmeneinheiten 2a, 2b durch die Betätigungseinheit 13 verlängert, bzw. verkürzt. Die Betätigungseinheit 13 ist zweckmäßig ein teleskopartiger, hydraulischer Arbeitszylinder ausgebildet, kann aber auch als Zugvorrichtung mit Schraubenspindel mit Drahtseil oder mit Kette funktionieren.

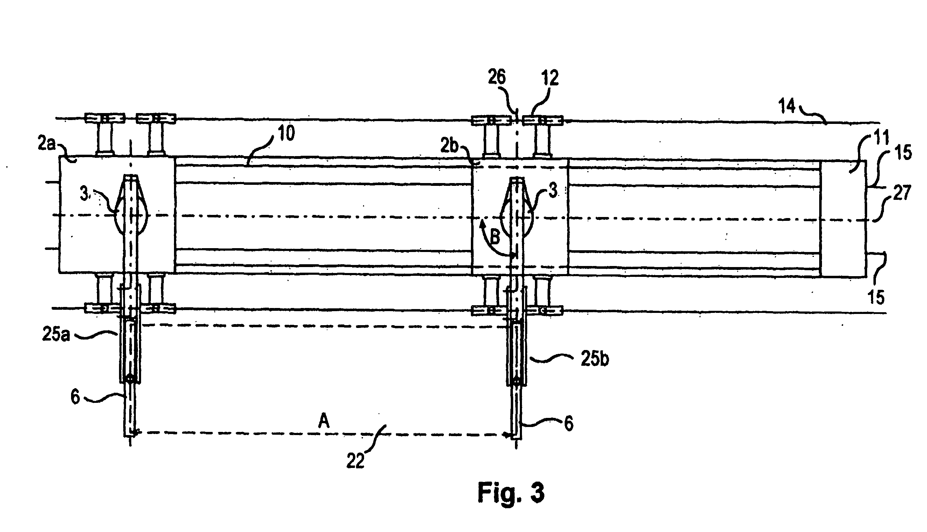

Au Abb. 3-4 ist die Vorrichtung während der Arbeit in der Aufsicht dargestellt. Die Vorrichtung befindet sich auf der Strecke 15. Auf Abb. 3 befindet sich der Container 22 über der Nachbarstrecke oder über der Straße neben der Strecke 15. Die Querstützen 12 sitzen auf der Abstützschiene 14 und können auf ihr auch verdreht werden. Die Kraneinheiten 25a, 25b halten den Container 22 mittels des Hebeorgans 6. Vorher musste sich die Rahmeneinheit 2b von der Längsstütze 11 um die Länge des Containers 22 entfernen. Die Längsachse 26 der Kraneinheiten 25a, 25b in der Aufsicht ist senkrecht zur Längsachse 27 der Vorrichtung. Der Winkel zwischen den Längsachsen 26, 27 ist mit "B" bezeichnet. Die Entfernung der Rahmeneinheiten 2a, 2b von einander ist mit "A" bezeichnet.

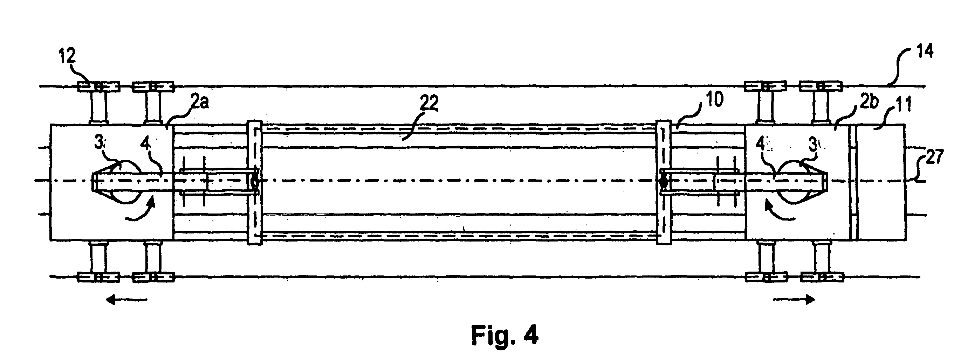

Beim Umladen des Containers 22 drehen sich die Kraneinheiten 25a, 25b auf den Drehgestellen 3 in entgegengesetzter Richtung, zweckmäßig spiegelsymmetrisch, von einander nach innen weg, die Rahmeneinheit 2b bewegt sich - infolge der geometrischen Zwangsbahn - nach hinten in Richtung der Längsstütze 11. Die Rahmeneinheit 2a bewegt sich notwendigerweise in entgegengesetzter Richtung. Die Rahmeneinheiten 2a, 2b werden von der axialen Betätigungseinheit 13 bewegt. Während der Bewegung rollen die Querstützen 12 - auch in belastetem Zustand - miteinander. Der Winkel "B" zwischen der Aufsichtlängsachse 26 der Kraneinheiten 25a, 25b und der Längsachse 27 der Vorrichtung ist mit der Entfernung "A" zwischen den Rahmeneinheiten 2a, 2b proportional. Auf Abb. 4. ist der Container 22 in ganz eingedrehter Lage dargestellt. Dann ist die Entfernung zwischen den Rahmeneinheiten 2a, 2b am größten.

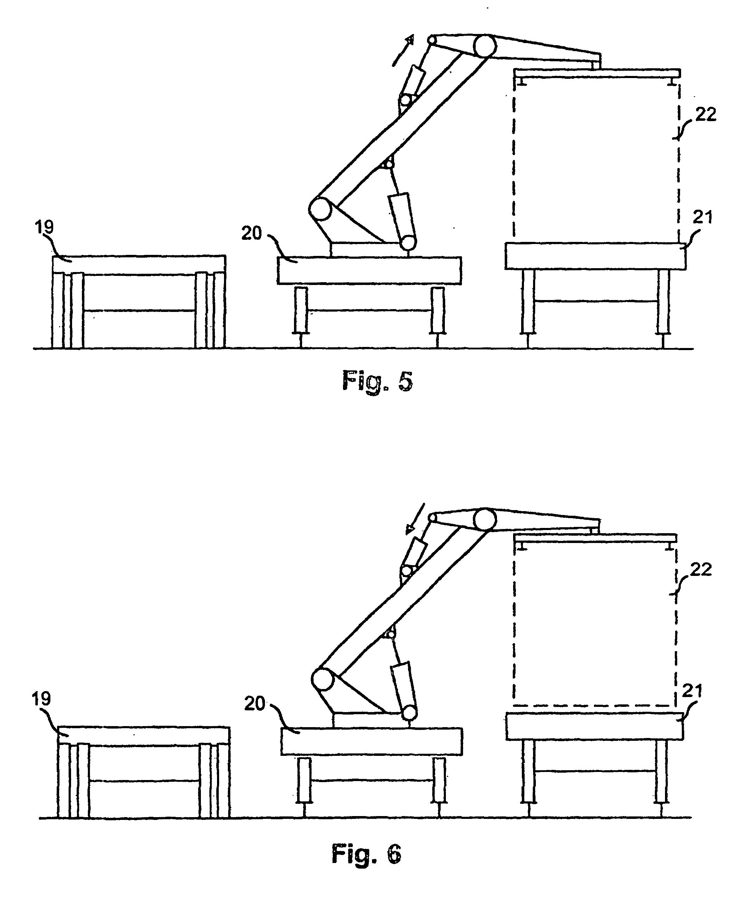

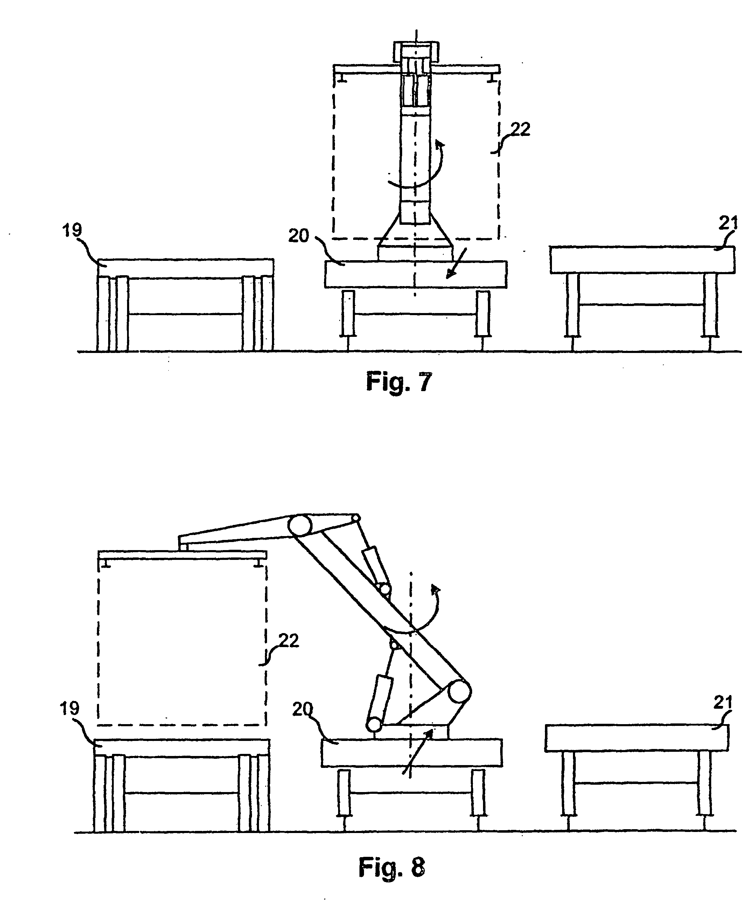

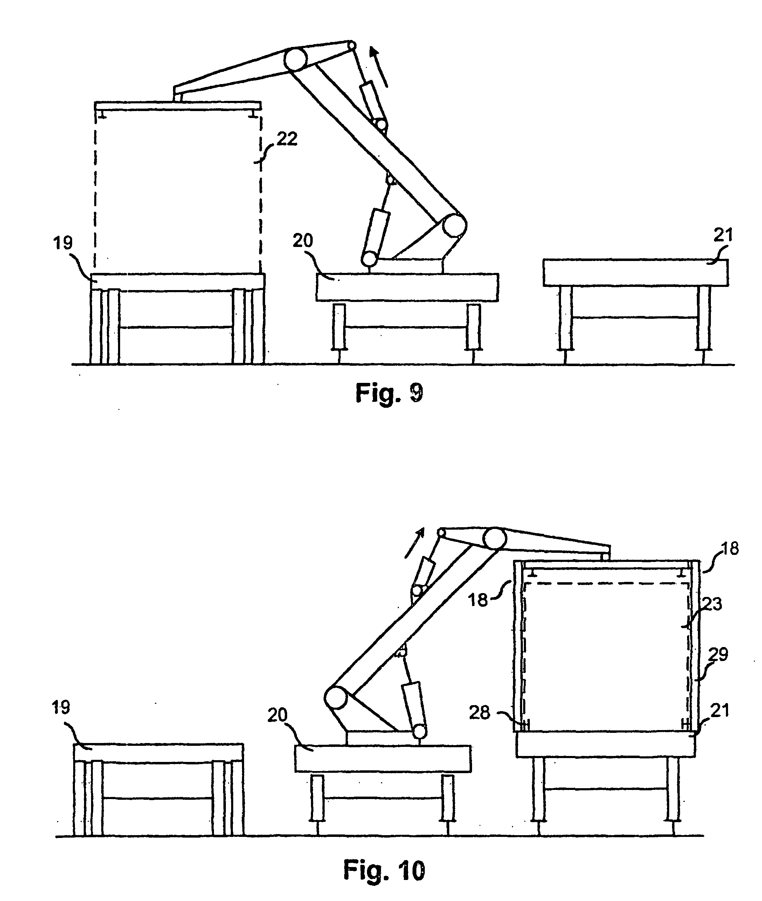

Auf Abb. 5-9 sind der Transportlastkraftwagen 19, die Containerumladevorrichtung 20, der Container 22 und der Eisenbahnwagen 21 dargestellt. Abb. 5 zeigt wie der Container 22 auf dem Eisenbahnwagen 21 angefasst wird, auf. Abb. 6 wie er hoch gehoben wird. In unserem Beispiel wird zum Anfassen ein über dem Container angeordneter Heberahmen benutzt. Man sieht, dass die Höhe der Containerumladevorrichtung 20 kaum etwas größer ist, als die Höhe des Containers 22, so dass die Vorrichtung in sicherer Entfernung von der Fahrleitung bleibt. Auf Abb. 7 wird der Container 22 über die Containerumladevorrichtung 20 hingedreht, auf Abb. 8 wird er weiter auf den Lastkraftwagen 19 gehoben und auf. Abb. 9 auf den Lastkraftwagen gestellt.

Auf Abb. 10 des Ausführungsmusters wird das Anfassen des austauschbaren Oberbaus 23 dargestellt. Der austauschbare Oberbau 23 ist ein Gerät, das im kombinierten Eisenbahn-Straßentransport benutzt wird für, welche nur untere, aber normgerechte Eckelemente haben. Diese werden mit der Hängeeinheit 18 angefasst und hoch gehoben. Die Hängeeinheit 18 ist mit einem Gelenk- oder Teleskophängearm 29 und mit den Anfasselementen 28 versehen.

Mit der erfindungsmäßigen Umladevorrichtung kann ein beliebiger, in der Regel 3-12 m langer Container umgeladen werden. Die Container können nach Bedarf auf einander gestellt werden. Im Falle, dass die Vorrichtung den Container aus irgendwelchem Grund abstellen muss, - z.B. sie muss ihn als Fahrzeug etwas weiter tragen, so kann der Container - durch Schwenken des unteren Auslegerarms 5 - auf die Trageinheit 9 abgestellt werden. Die Hebeorgane 6 sind in erster Reihe für das Anpacken von Containern mit ISO Eckelementen durch die oberen Öffnungen geeignet. Die unteren Eckelemente können mittels der Anfasselemente 28 durch die seitliche Öffnungen abgehoben werden. Die Dreheinheiten der Hebeorgane sind Hydromotoren, Arbeitszylinder, Elektromotoren, notwendigerweise auch mit Getrieben kombiniert.

Die erfindungsmäßige Containerumladevorrichtung kann innerhalb des geschützten Kreises noch durch zahlreiche weitere Ausführungsmuster verwirklicht werden.

## Patentansprüche

1. Eisenbahn-Containerumladeeinrichtung, welche - zweckmäßig zwei - Rahmeneinheiten (2a, 2b), eine auf die Rahmeneinheit gelegte Hebevorrichtung und Containerbefestigungselemente (16) enthält, die Hebevorrichtung zwei - zweckmäßig spiegelsymmetrisch angeordnete - für Zusammenarbeit geeignete Kraneinheiten (25a, 25b) bilden, die Kraneinheiten (25a, 25b) je ein Drehgestell (3), einen unteren Auslegerarm (4), einen oberen Auslegerarm (5), ein unteres Betätigungsorgan (7), ein oberes Betätigungsorgan (8) und ein Hebeorgan (6) enthält, **dadurch gekennzeichnet, dass** die Rahmeneinheiten (2a, 2b) durch eine, zur Bestimmung des Abstandes zwischen ihnen geeignete, zweckmäßig teleskopartige axiale Betätigungseinheit (13) miteinander verbunden sind, wobei der Abstand zwischen den Rahmeneinheiten (2a, 2b) durch die Betätigungseinheit (13) verlängert bzw. verkürzt wird, wenn sich die Kraneinheiten (25a, 25b) spiegel- symmetrisch nach innen, bzw. nach außen drehen.

2. Vorrichtung nach Anspruch 1, **dadurch gekennzeichnet, dass** zwischen die Rahmeneinheiten (2a, 2b) eine Trageinheit (9) zur provisorischen Abstützung des Containers (22) eingelegt ist.

3. Vorrichtung nach Anspruch 2. **dadurch gekennzeichnet, dass** die Trageinheit (9) Tragräder (24) besitzt, die Tragräder (24) sich auf dieselbe Strecke (15), wie die Räder (1) der Rahmeneinheiten (2a, 2b) stützen.

4. Vorrichtung nach einem der Ansprüche 1-3. **dadurch gekennzeichnet, dass** zwischen die Rahmeneinheiten (2a, 2b) mit der Strecke (15) parallele Verbindungselemente (10) eingelegt sind, die Verbindungselemente (10) durch die eine Rahmeneinheit (2b), hindurch laufen, während sie an der anderen Rahmeneinheit (2a) befestigt sind.

5. Vorrichtung nach Anspruch 4. **dadurch gekennzeichnet, dass** das Verbindungselement (10) in die auf der Strecke (15) befindliche Längsstütze (11) mündet.

6. Vorrichtung nach einem der Ansprüche 1-5. **dadurch gekennzeichnet, dass** das Hebeorgan (6) sich durch das Gelenk (17) an den oberen Auslegerarm (5) anschließt und mit dem Befestigungselement (16), gegebenenfalls mit der Hängeeinheit (18) verbunden ist.

7. Vorrichtung nach Anspruch 6. **dadurch gekennzeichnet, dass** die Hängeinheit (18) mit einem gelenk- oder teleskopartigen Hängearm (29), femer mit einem für die Befestigung des unteren Teils des austauschbaren Oberbaus (23) geeigneten Anfasselementen (28) versehen ist.

8. Vorrichtung nach einem der Ansprüche 1-7. **dadurch gekennzeichnet, dass** sich an die Rahmeneinheiten (2a, 2b) eine Querstützeinheit (12) anschließt, die für das Abstellen des Containers auf die mit der Strecke (15) parallele Stützschiene (14) geeignet ist.

## Claims

1. Railway container transhipment device comprising - preferably two - underframes (2a, 2b), an elevating mechanism fixed on the underframes (2a, 2b) and container clamping elements (16), the elevating mechanism comprises two - preferably mirrorsymmetric - crane units (25a, 25b) suitable for cooperating with each other, the crane unit (25a, 25b) comprises a bogie (3), a lower boom (4) and an upper boom (5), a lower moving gear (7) and an upper moving gear (8) and a lifting element (6), **characterized in that** the underframes (2a, 2b) are connected to each other by a - preferably telescopic - axial moving unit (13) suitable for defining the distance between them, where the moving unit (13) increases/decreases the distance between the underframes (2a, 2b), when the crane units (25a, 25b) are turning in/out in a mirrorsymmetric way.

2. The device according to claim 1 **characterized in that** there is a stand unit (9) situated between the underframes (2a, 2b), suitable for temporarily supporting the container (22).

3. The device according to claim 2 **characterized in that** the stand unit (9) has supporting wheels (24) which supporting wheels (24) bear up on the same railtrack (15) as the wheels (1) of the underframes (2a, 2b).

4. The device according to any of claims 1 - 3 **characterized in that** there are connecting elements (10) between the underframes (2a, 2b) situated parallel with the railtrack (15), the connecting elements (10) pass through one underframe (2b), while they are fixed to the other underframe (2a).

5. The device according to claim 4 **characterized in that** the connecting element (10) is joining to the longitudinal supporting unit (11) situated on the railtrack (15).

6. The device according to any of claims 1 - 5 **characterized in that** the lifting element (6) is connected to the upper boom (5) by a hinged member (17), and is in connection with the clamping element (16), or, if required, with the suspension unit (18).

7. The device according to claim 6 **characterized in that** the suspension unit (18) has a hinged or telescopic suspension arm (29) and catch elements (28) suitable for fixing the lower part of an exchangeable superstructure (23).

8. The device according to any of claims 1 - 7 **characterized in that** there is a transversal supporting unit (12) connected to the underframe (2a, 2b) suitable for bearing up on a supporting rail (14) running parallel to the railtrack (15).

## Revendications

1. Dispositif de transbordement de conteneurs comprenant - de préférence - deux unités de châssis (2a, 2b), un mécanisme élévateur monté sur l'unité de châssis et des éléments de fixation de conteneurs (16), le mécanisme élévateur étant composé de deux unités de grue - de préférence en disposition de symétrie miroir - capables de coopérer l'une avec l'autre (25a, 25b), l'unité de grue (25a, 25b) comprenant une tourelle (3), une flèche inférieure (4), une flèche supérieure (5), un organe moteur inférieur (7), un organe moteur supérieur (8) et un organe élévateur (6), **caractérisé en ce que** les unités de châssis (2a, 2b) sont reliées par une unité motrice axiale (13) capable de déterminer leur distance, l'unité motrice (13) agrandit ou diminue la distance entre les unités de châssis (2a, 2b), quand les unités de grue (25a, 25b) font des mouvements de symétrie miroir vers l'intérieur ou vers l'extérieur.

2. Le dispositif selon la revendication 1, **caractérisé en ce qu'**entre les unités de châssis (2a, 2b) il est placé une unité de support (9) capable d'appuyer provisoirement le conteneur (22).

3. Le dispositif selon la revendication 2, **caractérisé en ce que** l'unité de support (9) dispose de roues de support (24), les roues de support (24) s'appuyant sur la même voie (15) que les roues (1) de l'unité de châssis (2a, 2b).

4. Le dispositif selon l'une des revendications 1 à 3, **caractérisé en ce qu'**entre les unités de châssis (2a, 2b) il est intercalé des éléments de liaison (10) situés parallèlement à la voie (15), les éléments de liaison (10) passent à travers l'une des unités de châssis (2b), et ils sont fixés à l'autre unité de châssis (2a).

5. Le dispositif selon la revendication 4, **caractérisé en ce que** l'élément de liaison (10) rejoint l'unité de support longitudinale (11) située sur la voie (15).

6. Le dispositif selon l'une des revendications 1 à 5, **caractérisé en ce que** l'organe élévateur (6) est relié par un élément articulé (17) à la flèche supérieure (5), et est en liaison avec l'élément de fixation (16), le cas échéant à l'unité de suspension (18).

7. Le dispositif selon la revendication 6, **caractérisé en ce que** l'unité de suspension (18) est munie d'un bras de suspension articulé ou téléscopique (29), ainsi que d'un élément de prise (28) capable de fixer la partie inférieure d'une superstructure échangeable (23).

8. Le dispositif selon l'une des revendications 1 à 7, **caractérisé en ce qu'**à l'unité de châssis (2a, 2b) il est relié une unité de support transversale (12) apte à la pose sur le rail support (14) situé parallèlement à la voie (15).
